(19) Europäisches Patentamt
European Patent Office
Office européen des brevets

(11) Publication number: **0 283 615 B1**

(12) **EUROPEAN PATENT SPECIFICATION**

(45) Date of publication of patent specification: **08.05.91**

(51) Int. Cl.5: **C07F 15/00**, B01J 31/24, C07C 235/70, B01J 31/18

(21) Application number: **87304278.2**

(22) Date of filing: **14.05.87**

The file contains technical information submitted after the application was filed and not included in this specification

# (54) Rhodium-containing hydrogenation catalysts.

(30) Priority: **25.03.87 PT 74303**

(43) Date of publication of application: **28.09.88 Bulletin 88/39**

(45) Publication of the grant of the patent: **08.05.91 Bulletin 91/19**

(84) Designated Contracting States: **AT BE CH DE ES FR GB GR IT LI LU NL SE**

(56) References cited:
**EP-A- 0 086 046**
**EP-A- 0 187 436**
**US-A- 3 946 082**
**US-A- 4 207 258**
**US-A- 4 277 414**

(73) Proprietor: **PLURICHEMIE ANSTALT**
**P.O. Box 34722**
**FL-9490 Vaduz(LI)**

(72) Inventor: **Heggie,Dr William**
**Rua Elias Garcia,29-6 Esq.,**
**2830 Barreiro(PT)**
Inventor: **Hursthouse,Dr Michael Barry**
**79 Ravensbourne Drive,**
**Chelmsford,Essex CM1 2SL(GB)**
Inventor: **Page,Dr Philip Ronald**
**Casa Branca de Penaferrim,**
**Ramalhao,2710 Sintra(PT)**
Inventor: **Somerville,Dr Richard Gerard**
**23 Park Crescent**
**Hornchurch,Essex RM11 1BJ(GB)**
Inventor: **Villax,Ivan**
**3 Travessa do Ferreiro**
**1200 Lisboa(PT)**

(74) Representative: **Wain, Christopher Paul et al**
**A.A. THORNTON & CO. Northumberland House 303-306 High Holborn**
**London WC1V 7LE(GB)**

EP 0 283 615 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a new rhodium/triphenylphosphine/hydrazine homogeneous hydrogenation catalyst and to its preparation and use in the hydrogenation of the exocyclic methylene group of acid addition salts of 6-demethyl-6-deoxy-6-methylene-5-hydroxytetracycline (methacycline) to prepare α -6-deoxy-5-hydroxytetracycline (doxycycline).

Doxycycline is a wide-spectrum antibacterial agent, with widespread application in the treatment of numerous infections in humans and in animals. The hydrogenation of the exocyclic methylene group of methacycline can produce two epimers. The α- 6-epimer is doxycycline, whilst the β-6-epimer, called 6-epi-doxycycline, is devoid of clinical utility. Thus, it is important that the hydrogenation does not co-produce this β- 6-epimer. In fact, the British Pharmacopoeia 1980 established a limit for the content of 6-epi-doxycycline in doxycycline of 2%.

In the prior art, doxycycline was first described in 1960 in U.S. Patent No. 3,200,149. Since that time many methods have been described for its preparation, in all of which modification of the catalytic system has been described as producing improved yields or a purer product. In the field of heterogeneous catalysis, U.S. Patent Nos. 3,444,198, 3,849,491, 3,954,862 and 4,597,904 and the report in Chemical Abstracts 86, 89476 f (1977) of Hungarian Patent 12,042 have all taught improved methods for the preparation of doxycycline and its analogues.

The first use of homogeneous catalysis was described in U.S. Patent No. 4,207,258 (Italian priority 1972), wherein the catalyst was a complex of rhodium with tertiary phosphine, arsine and stibine ligands. U.S. Patent No. 3,962,331 extended the above process to the simultaneous reductive dehalogenation and hydrogenation of an 11a-halomethacycline. French Patent No. 2,216,268 later disclosed the use of the same catalyst.

Since that time, other patents have appeared such as U.S. Patent Nos. 3,907,890, 4,001,321 and 3,962,131 all describing variations in the catalytic system and claiming improved yields and stereospecificity.

The first homogeneous hydrogenation catalysts of the type of tertiary phosphine-hydrazino-rhodium complexes were described in U.S. Patent No. 4,550,096. These were prepared either by reacting a rhodium salt, specifically rhodium trichloride, with a tertiary phosphine and a hydrazine, or by reacting a rhodium complex, such as tris(triphenylphosphine)chlororhodium, with a hydrazine. These complexes allowed the preparation of doxycycline, containing less than 1% of the undesired 6-epi-doxycycline, in high yield using considerably less rhodium than had been taught in the prior art.

These complexes have proved to be very satisfactory catalysts for the hydrogenation of methacycline especially if an excess of a tertiary phosphine is included in the hydrogenation mixture as a promoter.

The exact chemical formulae and structures of the catalysts of this U.S. Patent were not disclosed in the patent, but reported elemental analyses showed some significant variability in elemental composition indicating variations in constitution.

It has now been found that, by changing the process conditions used in the U.S. Patent, a very satisfactory new catalyst can be made which has a well defined structure. It is advantageous, from general considerations, to be able to use catalysts of precisely known formula and structure, and furthermore the new catalyst is very effective for the hydrogenation of methacycline without the need to add any excess tertiary phosphine.

The new catalyst of the present invention is the compound di(μ-hydrazine-N[1]:N[2])-bis[bis-(triphenylphosphine)-rhodium (I)] dichloride which has the formula:

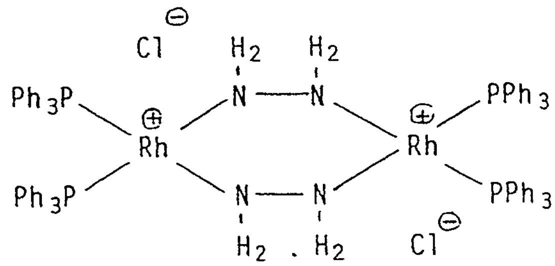

(I)

wherein Ph is phenyl.

The invention includes a process for making compound I which comprises reacting tris-(triphenylphosphine)chlororhodium with hydrazine or hydrazine hydrate in refluxing methanol under an inert atmosphere, characterised in that the reaction is conducted in the absence of oxygen using degassed methanol, three moles of hydrazine are used for each mole of tris(triphenylphosphine)chlororhodium, and the reaction mixture is refluxed for 2 hours followed by standing at room temperature for at least 12 hours, in order to form crystals of the said compound. The reaction mixture can be left to stand at room temperature for one to two days, for example.

The invention also includes a process for the catalytic stereospecific hydrogenation of an acid addition salt of 6-demethyl-6-deoxy-6-methylene-5-hydroxytetra-cycline to prepare α6-deoxy-5-hydroxytetracycline, wherein the hydrogenation is carried out at a temperature between 60 ° C and 100 ° C, at a pressure of 1 to 10 kg/cm$^2$ until the reaction is complete, followed by isolation of the thus formed compound by known processes, characterised by using the catalyst of the invention.

In the process of the invention for making the new catalyst, the tris(triphenylphosphine)chlororhodium must be freshly prepared, and stored and manipulated under an inert atmosphere. The preparation and isolation of the complex compound must be carried out under an inert atmosphere with complete exclusion of air and in degassed reaction media, followed by drying under an inert atmosphere or in vacuum. After eventual purification, the complex obtained is of a uniform composition and well defined formula. The formula has been unequivocally established by X-ray crystallography. The structure falls within the general structure given in U.S. Patent No. 4,550,096.

The catalyst of the invention is fully active in the hydrogenation of methacycline to doxycycline. Furthermore, it is not necessary to add excess triphenyl-phosphine to ensure a near stoichiometric yield of the required α-epimer.

The conditions of preparation of the catalyst of the present invention are illustrated in Example 1. The tris(triphenylphosphine)chlororhodium and hydrazine can be reacted in the molecular proportion corresponding to their respective formulae, but it is advantageous to use hydrazine in excess so as to obtain the maximum yield in relation to the expensive rhodium complex.

The hydrazine can be used as either the anhydrous base or as the monohydrate. It has been verified that the anhydrous base allows shorter reaction times.

In preparing the compound of formula I, tris(tri-phenylphosphine)chlororhodium (1 mole) and hydrazine hydrate (3 moles) are refluxed in degassed methanol under a nitrogen atmosphere, in adequate equipment, followed by standing at room temperature, filtration and drying under vacuum, to give yellow crystals of the compound. In contrast, cooling, preferably after concentration, favours the isolation of a different yellow solid and should be avoided.

The complex of formula I is stable for at least one month, providing it is stored under nitrogen at reduced temperatures. After this period, slightly diminished catalytic activity is sometimes observed. Therefore, the complex should be in preference freshly prepared to obtain the best hydrogenation results. Alternatively, it can be prepared immediately prior to use and then employed without isolation by addition to the hydrogenation reaction mixture, whereby equally good results can be achieved.

As already indicated, the hydrazino-rhodium complex of the present invention is an efficient homogeneous stereospecific hydrogenation catalyst, in general. The present invention , however, is especially concerned with its application in the hydrogenation of the exocyclic methylene group of 6-demethyl-6-deoxy-6-methylene-5-hydroxytetra-cycline present in the hydrogenation reaction mixture as an acid addition salt, so as to yield α-deoxy-5-hydroxy-tetracycline in a near stoichiometric yield.

The starting methacycline can be prepared by any of the known processes, such as that described in U.S. Patent No. 3,849,491, but should not contain impurities which may act as a catalyst inhibitor.

Although the new complex will catalyse the hydrogenation of methacycline base, the rate is so slow that the time of hydrogenation does not permit the yields obtained when using an acid addition salt.

The rate of hydrogenation increases with the temperature. Temperatures from ambient to 95 ° C can be used, but to achieve the best yields and stereospecificity, the optimum reaction temperature range should be between 85 ° C and about 90 ° C. At 95 ° C the yields are slightly lower than for instance at 88 ° C. Below 85 ° C, the catalytic system starts to be sensitive to the eventual presence of certain trace impurities which may interfere with the rate of hydrogenation.

In the context of the hydrogenation of methacycline acid addition salts for the preparation of doxycycline, the present invention has several advantages vhen the temperature range during hydrogenation is 85 ° C to about 90 ° C.

First, there is no necessity for extremely high hydrogen pressures. It has been found that from 1 kg/cm$^2$ to 10 kg/cm$^2$ will ensure complete conversion of the methacycline substrate in betveen 6 to about 10 hours.

Typically, the hydrogenation is carried out at 88-89 °C at a hydrogen pressure of 7 to 9 kg/cm$^2$ and is complete after 6 1/2 to 7 hours.

Second, the amount of rhodium necessary to obtain complete conversion is of the order of 0.0003 parts by veight of rhodium in relation to the methacycline acid addition salt substrate.

The transformation of the methacycline acid addition salt into doxycycline using the catalyst of the present invention gives a purity above 95% in the reaction mixture, as analysed by high performance liquid chromatography (h.p.1.c.).

In contrast to the catalysts of U.S. Patent No. 4,550,096, the catalyst of the present invention when prepared, dried, and stored under a strictly inert atmosphere, exerts full activity without the necessity of adding an excess of tertiary phosphine, more specifically triphenylphosphine, to the hydrogenation mixture so as to achieve the best yields.

An explanation for this is that the catalysts prepared according to the process of U.S. Patent No. 4,550,096 were believed to be stable and, in fact, they exerted a very high catalytic activity, even when stored for long periods, because they were subsequently employed in presence of a controlled excess of a tertiary phosphine. It is now believed that the catalysts prepared according to the process described in U.S. Patent 4,550,096 oxidise slowly, but the presence of the excess tertiary phosphine in the hydrogenation reaction mixture allowed substitution of the oxidised part of the tertiary phosphine, thereby regenerating the original catalytic system.

The hydrogenation is most conveniently carried out by adding the catalyst to the hydrogenator containing the methacycline acid addition salt in methanol at 50 °C, under nitrogen. Subsequently, the reaction vessel is purged again with nitrogen, then with hydrogen, finally being pressurised to 8 kg/cm$^2$ with hydrogen. The reaction mixture is heated to 88 °C under stirring, and the temperature maintained at 88 °C $\pm$ 2 °C until the velocity of consumption of hydrogen slows down drastically, which occurs after about 6 to 7 hours. At this time, the reaction mixture contains nearly exclusively α-6-deoxy-5-hydroxytetracycline.

The purity of the reaction mixture thus obtained is such that the doxycycline can be directly crystallised from the reaction mixture by adding excess p-toluene-sulphonic acid, followed by cooling, yielding doxycycline p-toluenesulphonate with a purity about 99%.

The following Example illustrates the present invention, without in any way limiting the scope thereof.

## EXAMPLE

### Preparation of di(μ-hydrazine-N$^1$:N$^2$)-bis[bis(triphenylphosphine) rhodium (I) dichloride

Tris(triphenylphosphine)chlororhodium (1.05 g; 1.13 mmoles) was placed in a two necked round bottom flask. The solid was stirred under vacuum for 30 minutes and then under an atmosphere of nitrogen. Dry, degassed methanol (170 ml) was added and the mixture was stirred for 15 minutes. A methanolic solution of hydrazine hydrate (30 ml of a methanolic solution containinig 5.91 mg/ml; 3.54 mmoles) was added. The reaction mixture was refluxed for 2 hours. Upon standing overnight, yellow crystals were deposited, which were filtered and dried under vacuum.

A single crystal of approximate dimensions 0.3 mm x 0.15 mm x 0.1 mm was sealed under argon in a thin walled glass capillary. Unit cell and intensity data were obtained using an Enraf-Nonius CAD4 diffractometer, following standard procedures. Details of the experimental features are as follows:-

Crystal data: $[C_{72}H_{68}N_4P_4Rh_2]$ . $[Cl]_2$ . $CH_3ON$ , Mw = 1422.02, monoclinic, space group P21/n, a = 15.009(3)Å, b = 13.294(2)Å, c = 18.391(4)Å, β = 108.9(1)°, V = 3471.9 Å$^3$, Z = 2, Dc = 1.36 g.cm$^{-3}$, μ - (Mo - Kα) = 6.14 cm$^{-1}$ .

Data collection: Data were recovered for

$$1.5^\circ \leqslant \theta \leqslant 21^\circ$$

at room temperature, 291 °K and corrected for absorption n empirically. 3716 intensities were measured, of which 1805 were considered observed [I >1.5 σ(I)] and used in the analysis.

The structure was solved via the heavy atom method and refined by full matrix least squares. In view of the small number of observed data, the structure was refined in the anisotropic approximation, but with the phenyl groups defined as rigid bodies. No hydrogens were confidently located on the hydrazine nitrogen

atoms and none were included. The final R value is 0.06.

The complex was found to contain a dimeric cation in which two $(Ph_3P)_2Rh$ units were linked together by two bridging hydrazine molecules, as shown in Ia:

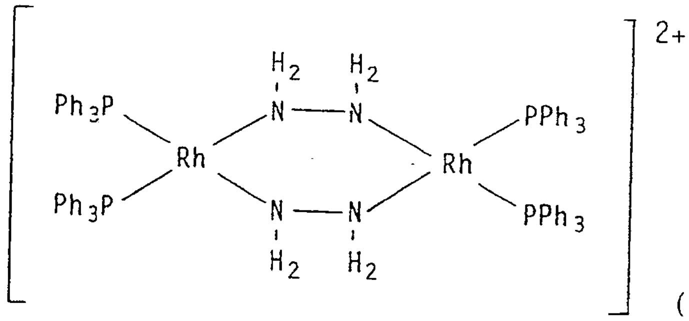

(Ia)

The rhodium centres have the expected square planar configuration, with the Rh-P and Rh-N distances being normal. The central $Rh_2N_4$ ring has a chair conformation, compatible with its centrosymmetric nature.

## Claims

1. The compound di(μ-hydrazine-$N^1$:$N^2$)-bis[bis(triphenylphosphine)-rhodium (I)] dichloride.

2. A process for the preparation of the compound of claim 1, which comprises reacting tris-(triphenylphosphine)-chlororhodium with hydrazine or hydrazine hydrate in refluxing methanol under an inert atmosphere, characterised in that the reaction is conducted in the absence of oxygen using degassed methanol, three moles of hydrazine are used for each mole of tris(triphenylphosphine)-chlororhodium, and the reaction mixture is refluxed for 2 hours followed by standing at room temperature for at least 12 hours, in order to form crystals of the said compound.

3. A process according to claim 2 , characterised by the fact that the inert atmosphere is nitrogen.

4. A process according to claims 2 and 3, characterised by the fact that the hydrazine is the anhydrous base or the monohydrate.

5. A process for the catalytic stereospecific hydrogenation of an acid addition salt of 6-demethyl-6-deoxy-6-methylene-5-hydroxytetracycline to prepare α-6-deoxy-5-hydroxytetracycline, wherein the hydrogenation is carried out at a temperature between 60° C and 100° C, at a pressure of 1 to 10 $kg/cm^2$ until the reaction is complete, followed by isolation of the thus formed compound by known processes, characterised by using the catalyst of claim 1.

6. A process according to claim 5, characterised by the fact that the hydrogenation is carried out at a temperature between 85° C and about 90° C.

7. A process according to claims 5 and 6, wherein the amount of rhodium contained in the catalyst is less than 0.0003 parts by weight per part of the 6-demethyl-6-deoxy-6-methylene-5-hydroxytetracycline acid addition salt to be hydrogenated, with the hydrogenation being substantially complete within 10 hours, and the hydrogenation reaction medium is methanol.

## Revendications

1. Le composé dichlorure de di(μ-hydrazine-$N^1$:$N^2$)-bis[bis(triphénylphosphine)rhodium (I)].

2. Procédé de préparation du composé de la revendication 1, qui comprend la réaction du tris-(triphénylphosphine)chlororhodium avec de l'hydrazine ou de l'hydrate d'hydrazine dans du méthanol au reflux sous une atmosphère inerte, caractérisé en ce que l'on réalise la réaction en l'absence d'oxygène dans du méthanol dégazé, on utilise trois moles d'hydrazine pour chaque mole de tris-(triphénylphosphine)chlororhodium, et on refluxe le mélange de réaction pendant 2 heures, cette étape étant suivie d'un repos à la température ambiante pendant au moins 12 heures, afin de former des cristaux dudit composé.

3. Procédé suivant la revendication 2, caractérisé en ce que l'atmosphère inerte est de l'azote.

4. Procédé suivant l'une ou l'autre des revendications 2 et 3, caractérisé en ce que l'hydrazine est la base anhydre ou le monohydrate.

5. Procédé d'hydrogénation stéréospécifique catalytique d'un sel d'addition d'acide de la 6-déméthyl-6-désoxy-6-méthylène-5-hydroxytétracycline pour la préparation de l'$\alpha$-6-désoxy-5-hydroxytétracycline, dans lequel l'hydrogénation est réalisée à une température se situant entre 60° C et 100° C, à une pression de 1 à 10 kg/cm$^2$ jusqu'à ce que la réaction soit achevée, suivie de l'isolement du composé ainsi formé par des processus connus, caractérisé en ce que l'on utilise le catalyseur de la revendication 1.

6. Procédé suivant la revendication 5, caractérisé en ce que l'on réalise l'hydrogénation à une température se situant entre 85° C et environ 90° C.

7. Procédé suivant l'une ou l'autre des revendications 5 et 6, caractérisé en ce que la quantité de rhodium contenue dans le catalyseur est inférieure à 0,0003 partie en poids par partie de sel d'addition d'acide de la 6-déméthyl-6-désoxy-6-méthylène-5-hydroxytétracycline à hydrogéner, l'hydrogénation étant pratiquement terminée après 10 heures, et en ce que le milieu de réaction d'hydrogénation est du méthanol.

**Ansprüche**

1. Die Verbindung Di($\mu$-hydrazin-N$^1$:N$^2$)-bis[bis(triphenylphosphin) rhodium(I) ] -dichlorid.

2. Verfahren zur Herstellung der Verbindung gemäß Anspruch 1, wobei Tris(triphenylphosphin)-chlororhodium mit Hydrazin oder Hydrazinhydrat in Methanol unter Rückfluß unter einer Inertgasatmosphäre umgesetzt wird, dadurch gekennzeichnet, daß die Reaktion in Abwesenheit von Sauerstoff unter Verwendung von entgastem Methanol durchgeführt wird, daß drei Mole Hydrazin je Mol Tris-(triphenylphosphin)chlororhodium eingesetzt werden, und daß die Reaktionsmischung 2 Stunden am Rückfluß erhitzt wird, worauf man wenigstens 12 Stunden bei Raumtemperatur stehen läßt, um Kristalle der Verbindung zu bilden.

3. Verfahren gemäß Anspruch 2, dadurch gekennzeichnet, daß die Inertgasatmosphäre aus Stickstoff besteht.

4. Verfahren gemäß Anspruch 2 und 3, dadurch gekennzeichnet, daß das Hydrazin als wasserfreie Base oder als Monohydrat eingesetzt wird.

5. Verfahren zur stereospezifischen katalytischen Hydrierung eines Säureadditionssalzes von 6-Desmethyl-6-desoxy-6-methylen-5-hydroxytetracyclin zur Herstellung von $\alpha$-6-Desoxy-5--hydroxytetracyclin, wobei die Hydrierung bei einer Temperatur zwischen 60° C und 100° C und einem Druck von 1-10 kg/cm$^2$ bis zur vollständigen Umsetzung durchgeführt wird, wonach die so gebildete Verbindung mit Hilfe bekannter Verfahren isoliert wird, dadurch gekennzeichnet, daß der Katalysator gemäß Anspruch 1 verwendet wird.

6. Verfahren gemäß Anspruch 5, dadurch gekennzeichnet, daß die Hydrierung bei einer Temperatur zwischen 85° C und etwa 90° C durchgeführt wird.

7. Verfahren gemäß Anspruch 5 und 6, wobei sich die Menge an Rhodium im Katalysator auf weniger als 0,0003 Gewichtsteile pro Gewichtsteil des zu hydrierenden Säureadditionssalzes von 6-Desmethyl-6-desoxy-6-methylen-5-hydroxytetracyclin beläuft, die Hydrierung nach 10 Stunden im wesentlichen vollständig und das Reaktionsmedium für die Hydrierung Methanol ist.